# NEW EUROPEAN PATENT SPECIFICATION

(11) **EP 2 654 515 B2**
(45) Date of publication and mention of the opposition decision: **11.12.2019**
(45) Mention of the grant of the patent: 07.12.2016
(21) Application number: 11850658.3
(22) Date of filing: 21.12.2011
(51) Int. Cl.: A47G 23/04, F25D 3/08, A47G 19/02, A47G 19/12, A47G 19/26

(54) **SYSTEM FOR PRESERVING OF NUTRITIONAL VALUE AT FOOD MATERIALS IN A COURSE**
SYSTEM ZUR BEWAHRUNG DES NÄHRWERTS IN NAHRUNGSMITTELN EINES GERICHTES
SYSTÈME D'EMBALLAGE POUR CONSERVER DES VALEURS NUTRITIVES D'ALIMENT COMPRIS DANS UN PLAT

(30) Priority: 21.12.2010 SE 1001211; 06.07.2011 SE 1100525
(43) Date of publication of application: 30.10.2013
(73) Proprietor: Sundberg, Carolina, 136 72 Tyresö (SE)
(72) Inventor: Sundberg, Carolina, 136 72 Tyresö (SE)
(74) Representative: Hynell Intellectual Property AB
(86) International application number: PCT/SE2011/000238
(87) International publication number: WO 2012/087216

(56) References cited:
- WO-A1-2010/020604
- WO-A1-2010/020604
- DE-A1-102004 063 398
- DE-U1- 20 320 088
- FR-A1- 2 857 944
- NL-C2- 1 007 936
- NL-C2- 1 007 936
- NL-C2- 1 008 008
- US-A- 5 088 301
- US-A- 5 088 301
- US-A1- 2004 045 314
- US-A1- 2004 045 314
- US-A1- 2004 112 368
- US-A1- 2004 112 368
- US-A1- 2008 230 508
- US-A1- 2011 284 545
- US-B1- 6 318 114
- US-B1- 6 318 114
- US-B1- 6 601 403
- US-B1- 6 601 403

## Description

The present invention relates to a packaging system to preserve nutritious values of food included in a food dish, more precisely to a storing system including a temperature preserving container.

Cool storing is a highly conventional way to prolong the usage of food. Normal and fresh raw substances for cocking food are subjected to a natural decomposition process, which at a certain stage makes the raw material and the processed food not usable as food for human beings. The humans do not have the intestinal flora needed to take care of food extremely contaminated by bacteria.

In these modem times there is a growing need to have a real control of the content in the food being consumed. Food engineers and chemists may have go a too dominating role together with short term economists in the decision to bring forward and put to market easy going food dishes of cheap and sometimes bad raw material. Long lasting durability is seldom achieved by life restricting preservatives and the sweetness in sugar free products and raw materials is often pure chemical. The actual consequences of this ought to be that we in a greater extent will cook our own food including a careful choice of ingredients combined with an increasing knowledge and recognition of said ingredients. This processing will to a great extent be valid to food in schools and hospitals that is food for growing generation being educated and to them being treated at hospitals. Prior to the consequences of the short term thinking in the process of purchasing food for schools has been understood by our elected politicians and the responsible experts to have them perform commendable decisions it will in a foreseeable time rest upon us consumers to take back control over the quality of the food.

Raw material and its way from seed, farmer, and intermediaries to the stores and from there to our kitchen/dinner tables are often long and above all expensive. This means that neighbour grown, kitchen gardens, art of cooking and mistress properties will once more come into its own. The present invention will then be of assistance for a continued controlled part in the distribution handling in the last link in the food processing chain, which is from the kitchen to the consuming.

US 6601403 B1 discloses a storing system according to the preamble of claim 1.

DE 203 20 088 U1 discloses the use of thermoplastic elastomer as material to be used in packagings for the food industry.

The main object of the present invention is to achieve an effective temperature preservation and especially a prolonging of the temperature influenced negative process acting on food and food dishes being stored in special easy transportable containers, in which there also is the possibility to heat up and to keep warm. Besides of keeping the nutritious values it is also of no less importance that the food is kept at a right temperature and being appetizing when served and thus will offer great taste experiences.

Another object is to obtain a container for storing and temperature preservation of food and food dishes in which a lid device will give the possibility to cool and keep cool or to heat and keep warm.

Yet another object is to obtain a storing container in the size of 0,3 to 2,4 litres with a built in capacity to keep content cool, preferably a vegetable based food dish, up to 7 hours.

Yet another object of the invention is to obtain a technique where the cooling is obtained both by built in cooling medium containing apartments in containers/lids and by insert of temperature preserving arrangements in direct or close contact to a food dish.

Still another object of the invention is to obtain a technique where e.g. the cooling medium in the container and/or lid will change colour when exceeding a temperature signalling danger to the health of an unfit content.

Still another object of the present invention is to disclose a packaging system with a cooling capacity, especially for fish dishes (type sushi) where different grades of a cooling effect may be achieved for different type of ingredients in the dish.

Yet another object of the present invention is to obtain a packaging system with separate loose trays or departments for different types of food ingredients such as sauces, salads, meat, vegetables, etc. It is also possible to arrange different spaces for cutleries, that is will have different configurations to fit cutleries and tools respectively. The different spaces or departments in the token portion may cooperate with especially designed and cooling lid portions.

Still another object of the invention is to obtain a packaging system with different types of lids, one lid to keep cool and another lid for heating the whole or certain parts of the ingredients forming part of a dish. A phase exchangeable material for the lid well suited for heating is stearine or wax, or a mixture of these. The combination or material chosen is the one suited for the method of heating and which performs the temperature suited for the current dishes. One should thereby avoid phase changeable materials causing a volume increase in the phase from liquid to gas, but it is in the transmission between solid and liquid as the heat accumulation and the later release of heat shall take place and vice versa. In this connection may be mentioned a special lid being open able on the topside that is it is possible to take out or put back cooling or heating modules in the lid depending on the need. This will bring special practical advantages, as a dish made in the evening may be stored in the main department in the fridge with the lid and without cooling module, which is placed in the freezer. The lid works to a full extent to cover and seal the main department. It is first when the main department is brought out from the fridge as it is equipped with the"charged" cooling module. When the food in the main department shall be consumed it can be fitted with a certain heating module in the lid if it is a dish best suited to be eaten warm. This special lid being opened able from above may be completely removable and have a special form or colour for the current dish. There is an option to integrate this with the cooling or heating module.

A last object of the present invention is to disclose a storing system where the present container and lid portions have different grades of cooling/heating and/or insulation properties to regulate and control the heat exchange with the dishes in an optimum way.

The objects mentioned above will be achieved by the package system to temperature preserving food having the characterizing clauses mentioned in the claims.

In connection to heating before ingestion and using a micro owen without jeopardizing the existing nutritious values in the current dish it is possible to just expose the lid containing the phase changeable cooling medium to the micro waves to make the accumulated heat being transferred to the food in an essentially more healthy way. The method to keeping the food substances cool will according to the present invention require a temperature holding storing container with a built in cooling capacity, preferably in a lid portion. This is per se previously known. Thus the lid parts at known containers have often become inflexible and hard to handle at the opening and closing. This is caused by keeping a cooling medium making the plastic material inflexible and hard to handle during opening and closing when temperatures are low. Furthermore the cooling capacity of known containers has been too week to fulfil the tempering purpose essentially longer than 2 - 3 hours.

The invention will be described below in connection to embodiments, where
Fig. 1A is a diagrammatic view from above of a storing container having a losable lid,
Fig. IB shows the container according to fig. 1A in a diagrammatic view from below,
Fig. 2 is a diagrammatic view from above of a cut out partial view of an outer lid part having an inner covering part forming the cool medium receiving space in the lid,
Fig. 3 is a diagrammatic view from above of the other side of the cut out partial view according to fig. 2 and with an encased joint strip,
Fig. 4 is a diagrammatic view of the outer lid part without an inner covering part,
Fig. 5 is a diagrammatic view of the covering part cooperating with the lid part according to fig. 4, and where
Fig. 6 is a diagrammatic view of the joint strip also having the purpose to join the outer lid part and the inner lid part.

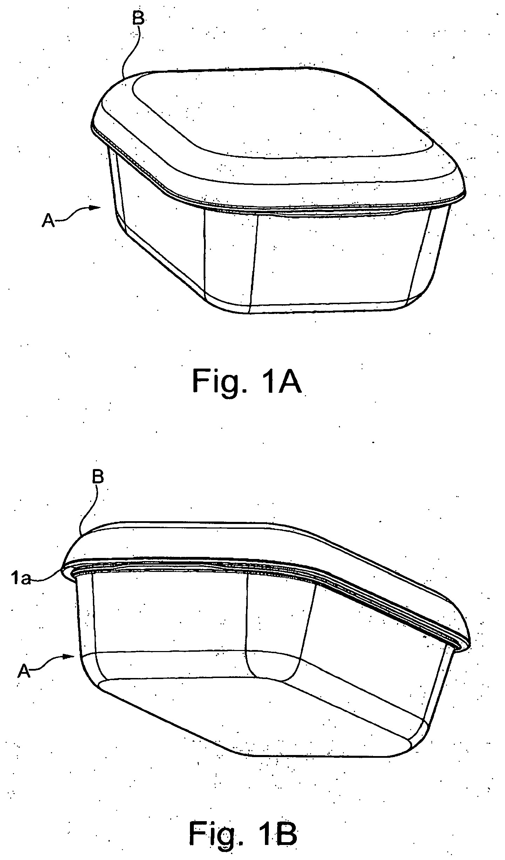

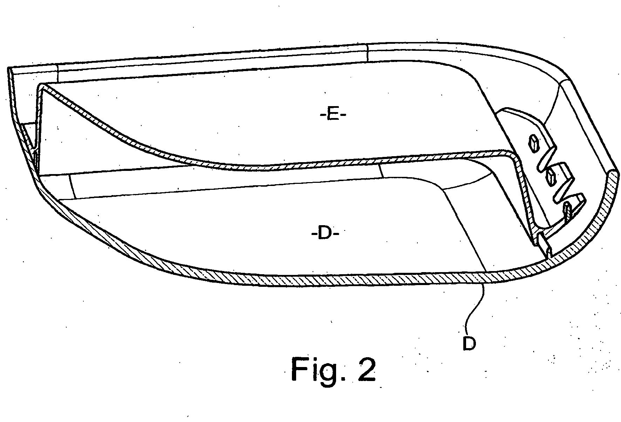

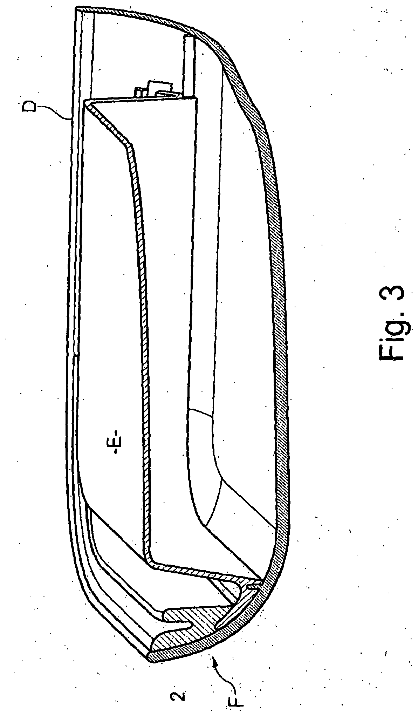

Fig. 1A and fig. 1B disclose the storing container A having a removable lid B and built in cooling capacity. The lid B, see also fig. 2 and 3, has a sealed department C containing the cooling medium. This department C is shown in fig. 2. The cooling medium may be a liquid or a cooling gel being transferred into a solid state (phase exchange) at a constant lower temperature and which keeps this lower temperature during the phase exchange going on to and from a liquid state during a simultaneous taking up or giving away of heat.

Fig. 2 and 3 disclose that the lid B itself constitutes of an outer lid part D and an inner covering part E forming the space C between themselves for the cooling medium acting to keep the temperature of the contents of the storing container when the lid part is sealed and applied to the container A. There are points of orienting or lugs in the lid part D acting as support to the inner covering part prior to this being completely sealed by a fixing sealing arrangement containing joint strip (fig. 3).

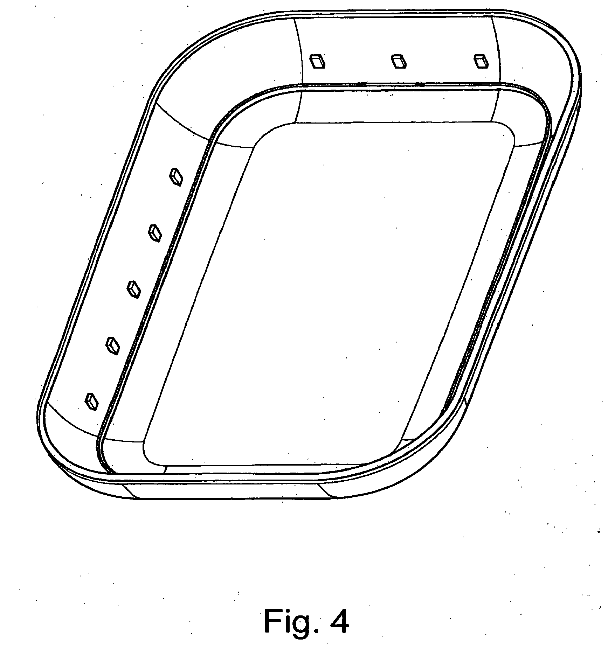

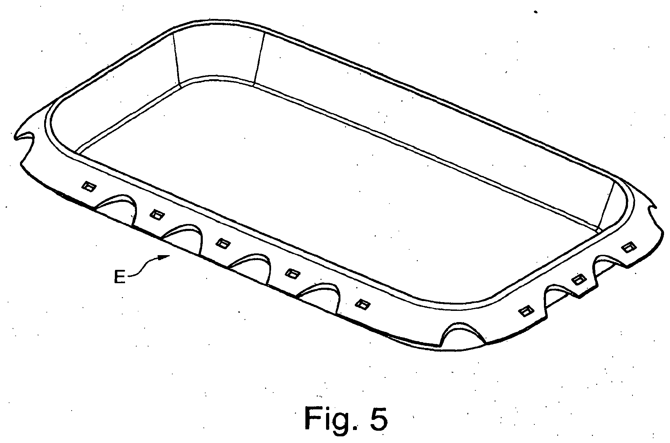

The lid part D is shown completely in fig. 4. The thickness of the wall of said inner covering part E is preferably less than the outer wall thickness of the outer lid part D. The inner covering part E is shown completely in fig. 5, where a disclosing of the wall portion of the inner covering part E is undulated. These because increasing the active effective joint line between the lid part D and the covering part E. The peripheral edge has also recesses into which the lugs are fitted and grip and hold the lid part D in a correct position during the final mounting and fixing by said joint arrangement containing joint strip F. This fixing is necessary from several reasons. On one hand a correct relative position between the lid part D and the covering part E shall be assured prior to the fixing phase when the joint strip F is applied, and on another hand must the forces coming from a volume change of the cooling medium during a phase transformation be handled without having the sealing properties between the lid part D and the covering part E endangered. In the joint strip F there is also the sealing arrangement between the container A and the lid part. The joint strip is injection moulded in place using a thermoplastic polymer, which in a heated liquid state will form a molecular bonding between the lid part and the covering part. Because of this the lid part and the covering part must be placed in a certain moulding tool where the material of the joint strip is injected in a heated liquid state.

In fig. 3 is shown the left portion of the lid part D shown in fig. 2 with the inner covering part E. In addition to what is shown in fig. 2 here can also be seen the sealing arrangements containing joint strip F.

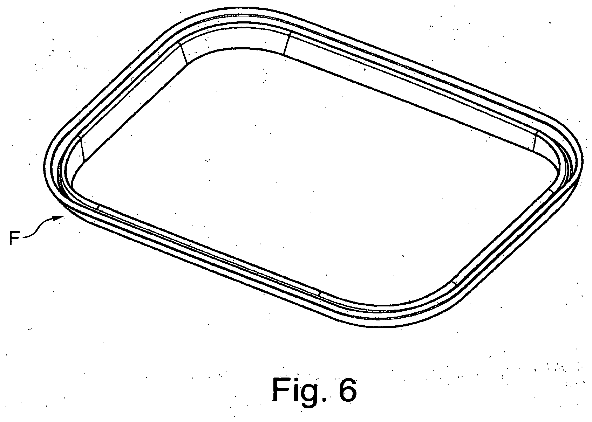

The joint strip F is fully shown in fig. 6 where also the sealing arrangement can be seen along its entire periphery. The joint strip is injection moulded in place in a plastic forming tool after the lid part and the inner covering part have been placed in correct relative positions. Thus the joint strip F has a double function by both seal, lock and permanently connect the lid part D and the covering part E and at the same time being shaped as a sealing arrangement towards the container A. The joint strip F consists of a material having good elastic properties also at low temperatures that is so it shall not make the lid hard to manage. The joint strip consists of a thermoplastic elastomer having a hardness between 45 and 75 Shore A, preferably ca 60 Shore A. Hereby the notch existing in the joint strip F securely and smoothly is able to cooperate and seal with the groove or spring part (the upper peripheral edge portion) at the container A. By the inner covering part having a material thickness being less than the thickness of the lid the cooling action will be directed more inwards to the container and what is stored there.

How much of the useful volume which shall be received of the temperature controlling lid part D has to be decided from case to case. Of course a bigger cooling capacity will demand a greater volume part of the container A and if it at the same time have different compartments for receiving different kinds of foods with different cooling needs, the total usable storing volume of the container may be increased by having the cooling action where it is mostly needed that is where it has its best effect.

The protruding part Ia at the upper edge opening of the container A is one example of a grip friendly arrangement making a controlled manual opening and closing of the container A by acting as an anvil when removing the lid B.

The lid B has a special sealed department E in which a cold medium is received.

This refrigerant may be a liquid or a cooling gel being frozen during a phase exchange and which after that can deliver cooling (absorb heat) during keeping of a healthy storing temperature. Advantageously the lid B has certain shaped gripping portions (not shown) facilitating a removal from the container part A. Preferably the phase exchangeable refrigerant is chosen so that it during a relatively long time will deliver cooling at a desired temperature. The choice of refrigerant and shaping of refrigerant containing departments E in the lid B will take place depending upon a specific type of dish/raw material. Thus depending upon the dish a refrigerant keeping a considerably lower temperature can be used also having a capacity (risk) of an instantaneous freezing the stored dish and in that way perform a two-stage effect in the cool storing. A condition for this is that the dish will not decrease quality in taste and consistence by being frozen. The advantage is that the storing time can be essentially extended and/or withstand higher outer temperatures with a retained effect.

Water is the most common substance being phase changed during receiving and delivering of energy. Humid air can per volume unit take up more energy in comparison with dry air and the water in the air is then acting as a phase changeable refrigerant in the same way as in weather systems during transfer of energy and balancing of temperatures by condensing and evaporation of water. The heat from the sun will perform the vaporizing of water. Water will expand when freezing too solid and is by this reason not optimally advantageous to use a refrigerant in connection to the present invention. There are refrigerants on the market being more suitable and which in a high degree will keep an original volume during the phase exchange. Some of these refrigerants will not completely be transferred into a solid phase but exist in a half floating, gel like cool condition. If wanted there is a possibility to add colour- shifting properties at different temperatures of the refrigerant to make sure that a certain stored food is kept at or below a certain temperature. This in turn will require that at least a part of the lid is transparent to a colour shifting.

Regarding shape, volume, colour, cooling and/or heating modules and colour combinations there are many possibilities to create a personal food box being optimally adapted to the current dish.

The present invention can very well be adapted for storing and transportation of temperature sensible raw materials from a store/place of purchase and may then be a part in a pledge system. Thus it is possible to have more of elongated containers for fresh fish or for other raw materials with a specific shape.

The cooling ability of the lid part may also be directed down towards the bottom of the container A. A cylindrical or ring shaped portion of the lid part may contain the refrigerant and in that way expose stored food to cooling or heating. Thus it shall be noted that the preservation of temperature also may mean keeping warm of food at a suitable eating temperature as a dish often is best in taste within pretty close temperature intervals. Even if it is possible to have the one and same refrigerant in the lid for keeping cool and for heating a special lid for keeping warm is preferred as a phase change temperature from liquid to solid being within the above mentioned close temperature intervals and which will guarantee an optimal taste experience of a premade (home cooked) dish being eaten warm. Thus a certain refrigerant for keeping warm gives a much longer warming time as the phase exchange process will release 10 times or more energy.

The invention is not restricted to the above-described embodiments, but modifications can be made within the scope of the following claims.

## Claims

1. Storing system for preserving nutritious values of food in a food dish, comprising a storing container (A):
a lid (B) comprising an outer lid part (D);
a chamber (C), which is restricted by the outer lid part (D) and by an inner covering part (E);
a phase change medium, which may be cooled or heated during a phase change to a solid or liquid state,
whereby the chamber (C) contains said phase change medium,
**characterized by**
a joint strip means (F) of a thermoplastic elastomer, which seals and attaches the inner covering part (E) to the one wall of the outer lid part (D); wherein said thermoplastic elastomer has a hardness between 45 and 75 shore A and said joint means strip is injection moulded into place using said thermoplastic elastomer which in a heated state will form a molecular bonding between the outer lid part and the inner covering part; and,
whereby the joint strip means (F) further forms a seal (G) between the storing container (A) and the outer lid part (D), while joining the container and the lid.

2. Storing system according to claim 1,
wherein the system comprises two or more lids (B) each containing a phase change medium, which may be cooled or heated before joining the storing system container (A) with a lid (B).

3. Storing system according any of the previous claim,
wherein the phase change medium changes colour at the phase change, wherein the colour will indicate existing temperature.

4. Storing system according to any of the previous claims,
wherein orienting points and/or lugs are arranged at the outer lid part (D) and acting as support to the inner covering part (E).

5. Storing system according to any of the previous claims, **characterized in that** orienting lugs are arranged at the outer lid part (D), whereby the peripheral edge of the inner covering part (E) has recesses into which the lugs fit to hold the lid part (D).

6. Storing system according to any of the previous claims,
wherein the thickness of the wall of the inner covering part (E) is less that the outer wall thickness of the outer lid part (D).

7. Storing system according to any of the previous claims,
wherein the joint strip (F) has a notch (3) that cooperates and seals with a groove of the container (A).

8. Storing system according to any of the previous claims,
wherein at least a part of the lid (B) is transparent.

9. Storing system according to any of the previous claims,
wherein the container (A) is divided in different departments, created by loose inserts.

10. Storing system according to claim 9,
wherein the inserts are adapted to suit special food dishes, such as sauces, salads, meat or vegetables.

11. Storing system according to claim 9 or 10,
wherein separate loose departments or loose trays are arranged in the container (A) for different food ingredients as well as cutleries and tools, whereby the different departments or trays cooperate with specially designed lid portions for suitable cooling.

12. Storing system according to claim 1 wherein a wall portion of said inner covering (E) is undulated.

## Patentansprüche

1. Lagersystem zum Bewahren von Nährwerten eines Lebensmittels in einem Lebensmittelgericht, umfassend
einen Lagerbehälter (A):
einen Deckel (B), der ein äußeres Deckelteil (D) umfasst;
eine Kammer (C), welche durch das äußere Deckelteil (D) und durch ein inneres Abdeckteil (E) begrenzt ist;
ein Phasenwechselmedium, welches während eines Phasenwechsels zu einem festen oder flüssigen Zustand gekühlt oder erhitzt werden kann,
wobei die Kammer (C) das Phasenwechselmedium enthält,
**gekennzeichnet durch**
ein Verbindungsstreifenmittel (F) aus einem thermoplastischen Elastomer, welches abdichtet und das innere Abdeckteil (E) an der einen Wand des äußeren Deckelteils (D) befestigt;
wobei das thermoplastische Elastomer eine Härte zwischen 45 und 75 Shore-A aufweist und das Verbindungsstreifenmittel in Position spritzgegossen ist unter Verwendung des thermoplastischen Elastomers, das in einem erhitzten Zustand eine molekulare Bindung zwischen dem äußeren Deckelteil und dem inneren Abdeckteil bilden wird; und,
wobei das Verbindungsstreifenmittel (F) während des Verbindens des Behälters und des Deckels weiter eine Dichtung (G) zwischen dem Lagerbehälter (A) und dem äußeren Deckelteil (D) bildet.

2. Lagersystem gemäß Anspruch 1,
wobei das System zwei oder mehr Deckel (B) umfasst, wobei jeder Deckel ein Phasenwechselmedium enthält, welches vor Verbinden des Lagersystembehälters (A) mit einem Deckel (B) gekühlt oder erhitzt werden kann.

3. Lagersystem gemäß einem der vorstehenden Ansprüche,
wobei das Phasenwechselmedium die Farbe bei dem Phasenwechsel wechselt, wobei die Farbe eine vorliegende Temperatur anzeigt.

4. Lagersystem gemäß einem der vorstehenden Ansprüche,
wobei Ausrichtungspunkte und/oder -laschen an dem äußeren Deckelteil (D) angeordnet sind und als Träger für das innere Abdeckteil (E) wirken.

5. Lagersystem gemäß einem der vorstehenden Ansprüche, **dadurch gekennzeichnet, dass** Ausrichtungslaschen an dem äußeren Deckelteil (D) angeordnet sind, wobei der Außenrand des inneren Abdeckteils (E) Vertiefungen aufweist, in welche die Laschen passen, um das Deckelteil (D) zu halten.

6. Lagersystem gemäß einem der vorstehenden Ansprüche,
wobei die Dicke der Wand des inneren Abdeckteils (E) kleiner ist als die äußere Wanddicke des äußeren Deckelteils (D).

7. Lagersystem gemäß einem der vorstehenden Ansprüche,
wobei der Verbindungsstreifen (F) eine Kerbe (3) aufweist, die mit einer Rille des Behälters (A) zusammenwirkt und abdichtet.

8. Lagersystem gemäß einem der vorstehenden Ansprüche,
wobei zumindest ein Teil des Deckels (B) durchsichtig ist.

9. Lagersystem gemäß einem der vorstehenden Ansprüche,
wobei der Behälter (A) in unterschiedliche Abteilungen geteilt ist, die durch lose Einsätze geschaffen werden.

10. Lagersystem gemäß Anspruch 9,
wobei die Einsätze angepasst sind um sich für spezielle Lebensmittelgerichte zu eignen, wie zum Beispiel Saucen, Salate, Fleisch oder Gemüse.

11. Lagersystem gemäß Anspruch 9 oder 10,
wobei separate lose Abteilungen oder lose Schalen in dem Behälter (A) für unterschiedliche Lebensmittelinhaltsstoffe, sowie unterschiedliche Räume für Besteck und Werkzeuge, angeordnet sind, wobei die unterschiedlichen Abteilungen oder Schalen zur geeigneten Kühlung mit speziell gestalteten Deckelabschnitten zusammenwirken.

12. Lagersystem gemäß Anspruch 1, wobei ein Wandabschnitt des inneren Abdeckteils (E) gewellt ist.

## Revendications

1. Système d'emballage pour la préservation des valeurs nutritives de nourriture dans un plat, comprenant
un récipient d'emballage (A) :
un couvercle (B) comprenant une partie (D) formant couvercle extérieur ;
une chambre (C), qui est délimitée par la partie (D) formant couvercle extérieur et par une partie de recouvrement intérieure (E) ;
un milieu à changement de phase, qui peut être refroidi ou chauffé pendant un changement de phase vers un état solide ou liquide,
la chambre (C) contenant ledit milieu à changement de phase,
**caractérisé par**
un moyen formant bande de jonction (F) en un élastomère thermoplastique, qui assure l'étanchéité et la jonction de la partie de recouvrement intérieure (E) avec une paroi de la partie (D) formant couvercle extérieur; ledit élastomère thermoplastique a une dureté comprise entre 45 et 75 shore A et ledit moyen formant bande de jonction est moulé par injection en place en utilisant ledit élastomère thermoplastique qui, dans un état chauffé, formera une liaison moléculaire entre la partie formant couvercle extérieur et la partie de recouvrement intérieure; et
le moyen (F) formant bande de jonction formant en outre un joint d'étanchéité (G) entre le récipient d'emballage (A) et la partie (D) formant couvercle extérieur, tout en reliant le récipient et le couvercle.

2. Système d'emballage selon la revendication 1,
dans lequel le système comprend différents types de couvercles (B) contenant chacun un milieu de changement de phase, qui peut être refroidi ou chauffé avant de relier container du système d'emballage (A) et un couvercle (B).

3. Système d'emballage selon l'une quelconque des revendications précédentes,
dans lequel le milieu de changement de phase change de couleur lors du changement de phase, de sorte que la couleur indique la température actuelle.

4. Système d'emballage selon l'une quelconque des revendications précédentes,
dans lequel des points et/ou des pattes d'orientation sont agencés sur la partie (D) formant couvercle extérieur et servent de support à la partie de recouvrement intérieure (E),

5. Système d'emballage selon l'une quelconque des revendications précédentes, **caractérisé en ce que** des pattes d'orientation sont agencées sur la partie (D) formant couvercle extérieur, le bord périphérique de la partie de recouvrement intérieure (E) présentant des évidements dans lesquels les pattes prennent place pour maintenir la partie formant couvercle (D).

6. Système d'emballage selon l'une quelconque des revendications précédentes,
dans lequel l'épaisseur de la paroi de la partie de recouvrement intérieure (E) est inférieure à l'épaisseur de la paroi extérieure de la partie (D) formant couvercle extérieur.

7. Système d'emballage selon l'une quelconque des revendications précédentes,
dans lequel la bande de jonction (F) présente une encoche (3) qui coopère et vient en relation d'étanchéité avec une rainure du récipient (A).

8. Système d'emballage selon l'une quelconque des revendications précédentes,
dans lequel au moins une partie du couvercle (B) est transparente.

9. Système d'emballage selon l'une quelconque des revendications précédentes,
dans lequel le récipient (A) est divisé en différents compartiments, créés par des inserts.

10. Système d'emballage selon la revendication 9,
dans lequel les inserts sont adaptés à des plats alimentaires spéciaux, tels que des sauces, des salades, des viandes ou des légumes.

11. Système d'emballage selon la revendication 9 ou la revendication 10,
dans lequel des compartiments ou des plateaux séparés sont disposés dans le récipient (A) pour différents ingrédients alimentaires, de même que différents espaces pour des couverts et des outils, de sorte que les différents compartiments ou plateaux coopèrent avec des parties de couvercle spécialement conçues pour un refroidissement approprié.

12. Système d'emballage selon la revendication 1, dans lequel une partie de paroi de ladite partie de recouvrement intérieure (E) est ondulée,
